# EUROPEAN PATENT SPECIFICATION

(11) **EP 1 334 600 B1**
(45) Date of publication and mention of the grant of the patent: **22.04.2009**
(21) Application number: 01981252.8
(22) Date of filing: 02.11.2001
(51) Int. Cl.: H04L 29/06

(54) **SECURING VOICE OVER IP TRAFFIC**
SICHERUNG ZUR SPRACHE-ÜBER-IP VERKEHR
SECURISATION DU TRAFIC VOIX SUR IP

(30) Priority: 16.11.2000 GB 0028068
(43) Date of publication of application: 13.08.2003
(73) Proprietor: TELEFONAKTIEBOLAGET LM ERICSSON (publ), 164 83 Stockholm (SE)
(72) Inventor: LINDBORG, Seppo, FIN-01510 Vantaa (FI); TURTIAINEN, Esa, FIN-02360 Espoo (FI); SCHULTZ, Göran, FIN-21600 Pargas (FI); KÄRNÄ, Juha-Petri, Fin-02100 Espoo (FI); LINNAKANGAS, Tommi, FIN-00370 Helsinki (FI)
(74) Representative: Norin, Klas
(86) International application number: PCT/SE2001/002412
(87) International publication number: WO 2002/041564

(56) References cited:
- R. BLOM, E. CARRARA, M. NASLUND: "Conversational Multimedia Security in 3G Networks" IETF DRAFT-BLOM-CMSEC-3G-00.TXT, 15 November 2000 (2000-11-15), XP002165086
- D. HARKINS, D. CARREL: "The Internet Key Exchange (IKE)" IETF RFC 2409, 1 November 1998 (1998-11-01), XP002165087
- TOGA J ET AL: "ITU-T STANDARDIZATION ACTIVITIES FOR INTERACTIVE MULTIMEDIA COMMUNICATIONS ON PACKET-BASED NETWORKS: H.323 AND RELATED RECOMMENDATIONS" COMPUTER NETWORKS AND ISDN SYSTEMS,NORTH HOLLAND PUBLISHING. AMSTERDAM,NL, vol. 31, no. 3, 11 February 1999 (1999-02-11), pages 205-223, XP000700319 ISSN: 0169-7552

## Description

### Field of the Invention

The present invention relates to a method and apparatus for securing Voice over IP (VoIP) traffic.

### Background to the Invention

There is an ever increasing demand for mobility in communications systems. However, this demand must be met in a manner which provides for the secure transfer of data between communicating parties. A concept known as the Virtual Private Network (VPN) has recently been introduced, with the aim of satisfying, by a combination of encryption and secure access, this demand. A VPN may involve one or more corporate Local Area Networks (LANs) or intranets, as well as users coupled to "foreign" LANs, the Internet, wireless mobile networks, etc.

An Internet Engineering Task Force (IETF) standard known as IPsec (RFC2401) has been defined and provides for the creation of a secure connection between parties in a VPN over IPv4 and IPv6. In the IPsec model the end points of the secure connection are identified by their IP addresses.

In order to allow IPSec packets to be properly encapsulated and decapsulated it is necessary to associate security services and a key between the traffic being transmitted and the remote node which is the intended recipient of the traffic. The construct used for this purpose is a "Security Association" (SA). SAs are negotiated between peer nodes using a mechanism known as "Internet Key Exchange" (IKE), and are allocated an identification known as a "Security Parameter Index" (SPI). The appropriate SA is identified to the receiving node by including the corresponding SPI in the headers of the transmitted data packets. Details of the existing SAs and the respective SPIs are maintained in a Security Association Database (SAD) which is associated with each IPSec node.

As already noted, IPSec SAs are negotiated using the IKE mechanism. More particularly, IPSec SAs make use of IKE phase 2. IKE phase 1 involves the negotiation of an IKE SA. When IKE phase 1 is initiated between two nodes, communications are carried out in the open. The mechanisms used must therefore be extremely secure and inevitably computationally intensive. At the end of phase 1 both nodes are authenticated to each other, and a shared secret is established between them. IKE phase 2 makes use of the IKE SA to negotiate one or more IPSec SAs. As the phase 2 negotiations are carried out using a secure mechanism, they can be much less computationally intensive than the phase 1 negotiation. Whilst a new IKE SA may be negotiated only infrequently (e.g. one a day or once a week), IPSec SAs may be negotiated every few minutes.

IPSec makes use of one or both of the Authentication Header (AH) and Encapsulation Security Payload (ESP) protocols which in turn make use of the corresponding established IPSec SA. Both of these protocols provide for the authentication of sent data packets whilst ESP provides in addition for the encryption of user data. The use of AH and/or ESP is agreed upon by the communicating nodes during the IKE negotiations.

The precise way in which IPSec is implemented in a system depends to a large extent upon the security policy of the organisation wishing to employ IPSec. For example, the organisation may specify end-points (e.g. user terminals) to which IP packets may be sent, or from which they may be received, the particular security levels to be used for encrypting packets, etc. Policy is stored in a Security Policy Database (SPD) which is also associated with each IPSec node. Typically, the SPD is distributed amongst a plurality of entities of the IPSec node. -

It is expected that in the very near future IP networks will be used to carry significant volumes of voice data. The use of IP networks for real time voice communication is referred to as Voice over IP (VoIP). Indeed VoIP already exists, although in practice its applications are limited by the poor bandwidth and quality offered by current IP standards and networks. As IP standards are revised and new standards created, it can be expected that more use will be made of VoIP.

The Internet is an open network in as much as unauthorised third parties can potentially intercept data and attempt to fraudulently transmit data. This is one of the main reasons for the creation of IPSec. Of course it is desirable to secure VoIP traffic and proposals have been made to allow the integration of VoIP with IPSec, such that VoIP traffic can be secured using the ESP protocol (which includes provision for data encryption). This solution is not without its problems however. The nature of speech and the real time transmission of speech requires the sending of relatively small data packets, containing in the region of 30-50 bits, with a high frequency. A typical ESP header, plus the ESP trailer (and authentication data) contains up to 160 bits, resulting in a doubling or trebling of the total packet size. This does not represent an efficient use of the IP resources. A similar problem applies to the transmission of other real time streamed data such as videoconferencing and multimedia data.

IETF DRAFT-BLOM-CMSEC-3G-00.TXT (of 15 November 2000) titled "Conversational Multimedia Security in 3G Networks" considers mechanisms for securing conversational media for transmission over an IP network. The document proposes the use of a stream cipher, for example based upon a block cipher.

### Summary of the Invention

The inventors of the present invention have recognised that, whilst IPSec does not represent an optimal solution for VoIP or other streamed data, it is likely to be installed on many terminals and devices employing streamed data. Certain components of IPSec may be advantageously employed with streamed data, providing that these components do not add excessively to the size of data packet.

According to a first aspect of the present invention there is provided a method of sending streamed data over an IP network from a first node to a second node, the method comprising:
using Internet Key Exchange (IKE) to establish an IKE security association (SA) between the first and second nodes;
using the IKE SA to establish an IPSec SA between the first and second nodes;
encrypting the streamed data at the first node with a cipher using a shared secret forming part of said IPSec SA;
constructing IP datagrams containing in their payload segments of the encrypted streamed data, the datagrams not including an IPSec header or headers; and
sending the IP datagrams from the first node to the second node.

The present invention is particularly applicable to the secure transmission of VoIP data or videoconferencing data. It will be appreciated that such data does generally not require authentication as the data is self-authenticating. The main security concern is that of third parties monitoring the data, and this can be done by using IKE to generate an encryption key.

The method of the present invention may be used to secure streamed data sent between two nodes which represent end points for the data, e.g. two telephone terminals or PCs, or between two nodes which tunnel data between respective end points (e.g. gateways and firewalls).

According to a second aspect of the present invention there is provided apparatus for sending streamed data over an IP network to a peer node, the apparatus comprising:
processing means and memory containing software instructions for implementing IPSec protocols;
an application for delivering streamed data;
means for employing components of said processing means and memory containing software instructions for using Internet Key Exchange (IKE) to establish an IKE security association (SA) between the first and second nodes;
means for using the IKE SA to establish an IPSec SA between the first and second nodes, the IKE SA comprising a shared secret;
means for encrypting the streamed data with a cipher using the shared secret;
means for constructing IP datagrams containing in their payload segments of the encrypted streamed data, the datagrams not including an IPSec header or headers; and
transmission means for sending the IP datagrams from the first node to the second node.

The apparatus of the present invention may be an end user terminal such as a telephone, communicator, PDA or palmtop computer, or a personal computer (PC). Alternatively, the apparatus may be a firewall or gateway coupled to an end point which is the source of the streamed data.

### Brief Description of the Drawings

Figure 1 illustrates schematically a Virtual Private Network (VPN) comprising an intranet;
Figure 2 illustrates at a general level the signalling between two nodes of the VPN of Figure 1 during a secure data connection establishment process;
Figure 3 illustrates at a more detailed level the signalling involved in an IKE phase 1 of the process of Figure 2;
Figure 4 illustrates a Quick Mode message exchange of an IKE phase 2 of the process of Figure 2; and
Figure 5 is a flow diagram illustrating a secure VoIP method according to an embodiment of the present invention.

### Detailed Description of a Preferred Embodiment

The method which will now be described makes use of features described in the following documents: [IPSec] RFC 2401, Security Architecture for the Internet Protocol, November 1998; [REKEY] Internet Draft, IPsec Re-keying Issues; [IKE] RFC 2409, The Internet Key Exchange (IKE), November 1998; [ISAKMP] RFC 2408, Internet Security Association and Key Management Protocol, November 1998; [INTDOI] RFC 2407, The Internet Security Domain of Interpretation for ISAKMP, November 1998. Reference should be made to these documents for a fuller understanding of the method.

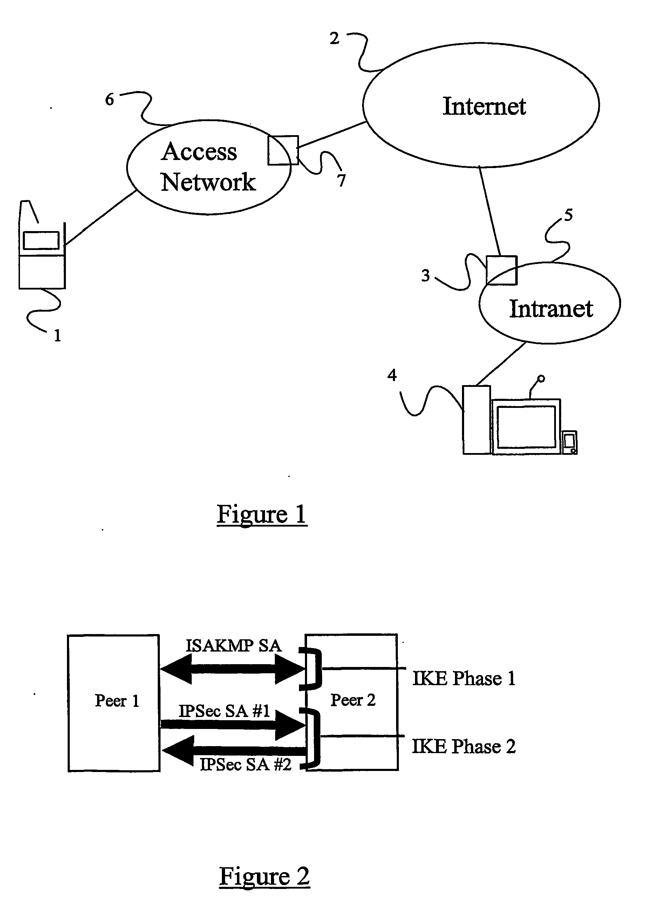

Figure 1 illustrates a situation where a mobile wireless device 1 may use the Internet 2 to connect to an organisation's firewall or Security Gateway (SG) 3, and then to gain access to some correspondent host (e.g. a server or other machine) 4 connected to the organisation's intranet (i.e. corporate LAN) 5. An access network 6 couples the mobile host 1 to the Internet 2 via a gateway 7. The access network may be for example a GSM network using GPRS, or may be a third generation network such as a UMTS network. The Mobile device 1 includes hardware and software components for implementing IP, including IPSec. Using IKE (phase 1 and phase 2 as illustrated in Figure 2), the mobile terminal can create IPSee SAs with which it can securely exchange data with the correspondent host 4.

As has been explained above, IPSec results in large headers (and other components) being added to data packets and is therefore not suitable for VoIP traffic. In order to overcome this problem, the embodiment of the invention described here makes use only of the IKE component of IPSec.

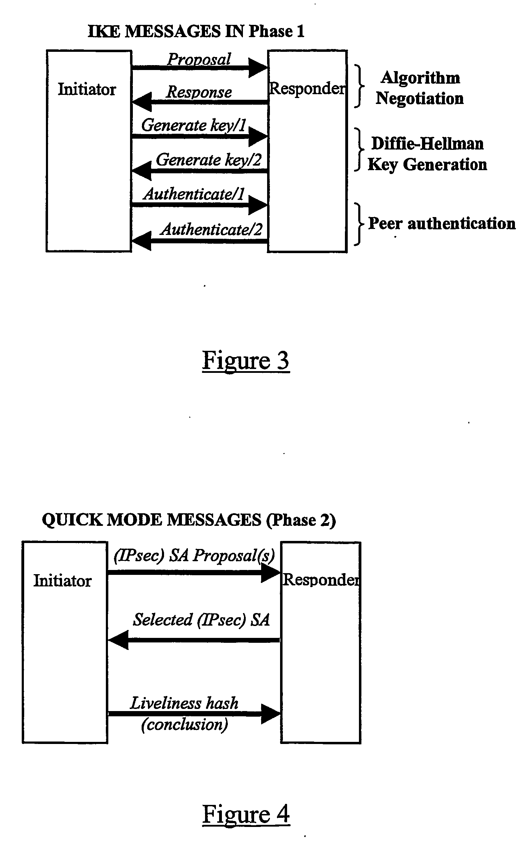

Assuming that VoIP traffic is to be exchanged between the mobile device 1 (peer 1) and the correspondent host 4 (peer 2). Both peer nodes will make use of software applications which provides the interface to the user (this application may present a simulated telephone on the display of the correspondent host 4). A VoIP communication is initiated by one of the peer nodes sending a request to the other node. An IKE phase 1 negotiation is then carried out between the peers using ISAKMP - this is illustrated in Figure 3. The result of this negotiation is the authentication of the peers to one another, and the creation of an IKE (or ISAKMP) SA which defines amongst other things the encryption algorithm (to be used for negotiating IPSec SAs if required). The Phase 1 negotiation also results in the generation of a secret (or "key") which is shared between the two nodes.

The shared secret may be used to encrypt the VoIP data directly, using the encryption algorithm and other associated parameters associated with the IKE SA. In this case, the relevant encryption data is made available to the VoIP applications. However, rather than use the IKE SA data, it may be preferable to enter IKE phase 2 and negotiate a pair of IPSec SAs (one for each transmission direction). IKE phase 2 is illustrated in more detail in Figure 4. The IPSec SA data relevant to encryption, including a pair of encryption keys, is then passed to the VoIP applications. The advantage of using IKE phase 2 is that the IKE phase 1 negotiation need only be done occasionally, with IKE phase 2 being carried out each time a new connection is required.

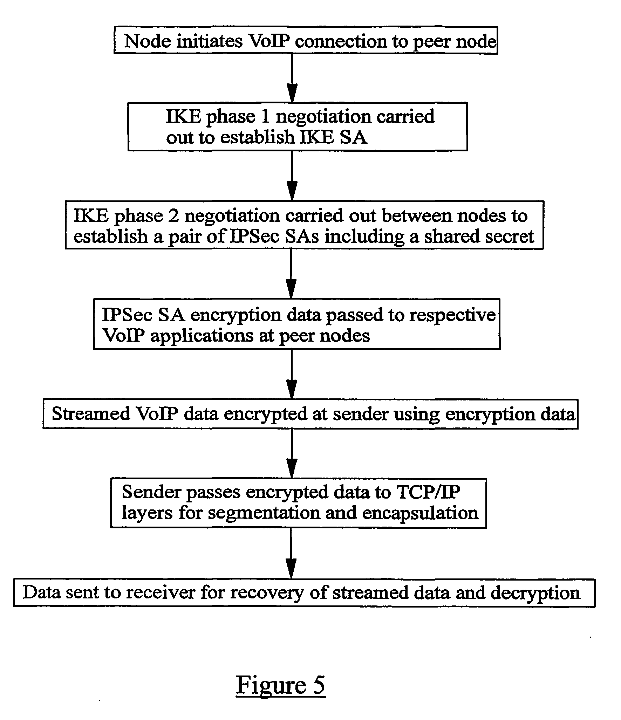

Whichever SA is selected (IKE or IPSec), the VoIP application at the transmitting peer uses the encryption data to encrypt the streamed VoIP data generated by the application. The encrypted data is then passed to the TCP/IP layers for segmentation and encapsulation with standard IP headers. As the IP data is not subjected to the complete IPSec procedure, the resulting IP packets do not include IPSec headers including AH and ESP headers. At the receiving peer, the IP data packets are decapsulated and the reconstructed, encrypted data stream passed to the VoIP application for decryption. Figure 5 illustrates the interaction of the VoIP application at one of the peers with the IPSec and IP protocol layers.

Figure 6 is a flow diagram illustrating a method of setting up a VoIP connection between two peers.

It will be appreciated by the person of skill in the art that various modifications may be made to the above described embodiments without departing from the scope of the present invention. For example, in some circumstances security may only be required between the access network IP gateway 7 and the intranet IP gateway 3, in which case an IKE SA (and IPSec SA if necessary) will be negotiated between these nodes upon initiation of a VoIP communication by one of the end points 1,4. It is also envisaged that encryption may be used only between the device 1 and the intranet gateway 3 or between the access network gateway 7 and the correspondent host 4. It will also be appreciated that whilst the invention has been exemplified with reference to IKE, IKE is an evolving standard and as such the invention can equally be applied to derivatives of the current IKE standard.

## Claims

1. A method of sending streamed data over an IP network from a first node to a second node, the method comprising:
using Internet Key Exchange (IKE) to establish an IKE security association (SA) between the first and second nodes;
using the IKE SA to establish an IPSec SA between the first and second nodes;
encrypting the streamed data at the first node with a cipher using a shared secret forming part of said IPSec SA;
constructing IP datagrams containing in their payload segments of the encrypted streamed data; and
sending the IP datagrams from the first node to the second node,
the method further comprises that the datagrams do not include an IPSec header or headers.

2. A method according to claim 1, wherein said streamed data is VoIP data or videoconferencing data.

3. A method according to any one of the preceding claims, wherein said peer nodes are end points for the data.

4. A method according to any one of the preceding claims, wherein said peer nodes tunnel data between respective end points.

5. Apparatus for sending streamed data over an IP network to a peer node, the apparatus comprising:
processing means and memory containing software instructions for implementing IPSec protocols;
an application for delivering streamed data;
means for employing components of said processing means and memory containing software instructions for using Internet Key Exchange (IKE) to establish an IKE security association (SA) between the first and second nodes;
means for using the IKE SA to establish an IPSec SA between the first and second nodes, the IKE SA comprising a shared secret;
means for encrypting the streamed data with a cipher using the shared secret;
means for constructing IP datagrams containing in their payload segments of the encrypted streamed data; and
transmission means for sending the IP datagrams from the first node to the second node,
said means for constructing IP datagrams do not include an IPSec header or headers in the datagrams.

6. Apparatus according to claim 5, the apparatus being an end user terminal such as a telephone, communicator, PDA or palmtop computer, or a personal computer (PC).

7. Apparatus according to claim 6, the apparatus being a firewall or gateway coupled to an end point which is the source of the streamed data.

## Patentansprüche

1. Verfahren zum Senden von Streaming-Daten über ein IP-Netz von einem ersten Knoten an einen zweiten Knoten, das Verfahren umfassend:
Verwenden von Internet-Schlüsselaustausch (IKE), um zwischen den ersten und zweiten Knoten eine IKE-Sicherheitsassoziation (SA) aufzubauen;
Verwenden von IKE SA, um zwischen den ersten und zweiten Knoten eine IPSec SA aufzubauen;
Verschlüsseln der Streaming-Daten am ersten Knoten mit einem Schlüssel unter Verwendung eines gemeinsamen Geheimnisses, das ein Teil der IPSec SA ist;
Konstruieren von IP-Datagrammen, die in ihrer Nutzlast Segmente der verschlüsselten Streaming-Daten enthalten; und
Senden der IP-Datagramme vom ersten Knoten an den zweiten Knoten,
das Verfahren umfasst außerdem, dass die Datagramme keinen IPSec-Header oder -Headers enthalten.

2. Verfahren nach Anspruch 1, worin die Streaming-Daten VoIP-Daten oder Videokonferenzdaten sind.

3. Verfahren nach einem der vorhergehenden Ansprüche, worin die Peer-Knoten Endpunkte für die Daten sind.

4. Verfahren nach einem der vorhergehenden Ansprüche, worin die Peer-Knoten zwischen jeweiligen Endknoten Daten tunneln.

5. Vorrichtung zum Senden von Streaming-Daten über ein IP-Netz an einen Peer-Knoten, die Vorrichtung umfassend:
ein Verarbeitungsmittel und einen Speicher, Softwareanweisungen zum Implementieren von IPSec-Protokollen enthaltend;
eine Anwendung zum Übergeben von Streaming-Daten;
ein Mittel zum Einsatz von Bauteilen des Verarbeitungsmittels und Speichers, Softwareanweisungen zur Verwendung von Internet-Schlüsselaustausch (IKE) enthaltend, um zwischen den ersten und zweiten Knoten eine IKE-Sicherheitsassoziation (SA) aufzubauen;
ein Mittel zum Verwenden der IKE SA, um eine IPSec SA zwischen den ersten und zweiten Knoten aufzubauen, wobei die IKE SA ein gemeinsames Geheimnis umfasst;
ein Mittel zum Verschlüsseln der Streaming-Daten mit einem Schlüssel unter Verwendung des gemeinsamen Geheimnisses;
ein Mittel zum Konstruieren von IP-Datagrammen, die in ihrer Nutzlast Segmente der verschlüsselten Streaming-Daten enthalten; und
ein Sendemittel zum Senden der IP-Datagramme vom ersten Knoten an den zweiten Knoten, wobei das Mittel zum Konstruieren von IP-Datagrammen keinen IPSec-Header oder -Headers in den Datagrammen einschließt.

6. Vorrichtung nach Anspruch 5, wobei die Vorrichtung ein Endbenutzer-Endgerät ist wie beispielsweise ein Telefon, ein Kommunikationsgerät, ein PDA oder Palmtop-Computer oder ein Personalcomputer (PC).

7. Vorrichtung nach Anspruch 6, wobei die Vorrichtung ein Firewall oder ein Gateway ist, an einen Endpunkt gekoppelt, der die Quelle der Streaming-Daten ist.

## Revendications

1. Procédé d'envoi de données de transmission en continu sur un réseau IP d'un premier noeud à un second noeud, le procédé comprenant :
l'utilisation d'Internet Key Exchange (IKE) pour établir une association de sécurité (SA) IKE entre les premier et second noeuds ;
l'utilisation de la SA IKE pour établir une SA IPSec entre les premier et second noeuds ;
le cryptage des données de transmission en continu au niveau du premier noeud avec un chiffre en utilisant un secret partagé faisant partie de ladite SA IPSec ;
la construction de datagrammes IP contenant dans leurs données utiles des segments des données de transmission en continu cryptées ; et
l'envoi des datagrammes IP du premier noeud au second noeud,
le procédé comprend en outre le fait que les datagrammes n'incluent pas d'en-tête(s) IPSec.

2. Procédé selon la revendication 1, dans lequel lesdites données de transmission en continu sont des données VoIP ou des données de visioconférence.

3. Procédé selon l'une quelconque des revendications précédentes, dans lequel lesdits noeuds pairs sont des points d'extrémité pour les données.

4. Procédé selon l'une quelconque des revendications précédentes, dans lequel lesdits noeuds pairs tunnellise les données entre des points d'extrémité respectifs.

5. Appareil d'envoi de données de transmission en continu sur un réseau IP à un noeud pair, l'appareil comprenant :
un moyen de traitement et une mémoire contenant des instructions logicielles pour mettre en oeuvre des protocoles IPSec ;
une application pour délivrer des données de transmission en continu ;
un moyen pour employer des composants dudit moyen de traitement et de ladite mémoire contenant des instructions logicielles pour utiliser Internet Key Exchange (IKE) afin d'établir une association de sécurité (SA) IKE entre les premier et second noeuds ;
un moyen pour utiliser la SA IKE afin d'établir une SA IPSec entre les premier et second noeuds, la SA IKE comprenant un secret partagé ;
un moyen pour crypter les données de transmission en continu avec un chiffre en utilisant le secret partagé ;
un moyen pour construire des datagrammes IP contenant dans leurs données utiles des segments des données de transmission en continu cryptées ; et
un moyen de transmission pour envoyer les datagrammes IP du premier noeud au second noeud, ledit moyen pour construire des datagrammes IP n'inclut pas d'en-tête(s) IPSec dans les datagrammes.

6. Appareil selon la revendication 5, l'appareil étant un terminal d'utilisateur final tel qu'un téléphone, un appareil de communication, un PDA ou un ordinateur de poche, ou un ordinateur personnel (PC).

7. Appareil selon la revendication 6, l'appareil étant un pare-feu ou une passerelle couplé à un point d'extrémité qui est la source des données de transmission en continu.
